# EUROPÄISCHE PATENTSCHRIFT

(11) **EP 0 968 860 B1**
(45) Veröffentlichungstag und Bekanntmachung des Hinweises auf die Patenterteilung: **13.07.2005**
(21) Anmeldenummer: 99110204.7
(22) Anmeldetag: 26.05.1999
(51) Int. Cl.: B60H 3/06, B01D 53/04

(54) **Vorrichtung zur Reinigung eines Luftstroms**
Apparatus for cleaning an air stream
Dispositif pour purifier un courant d'air

(30) Priorität: 27.05.1998 DE 19823611
(43) Veröffentlichungstag der Anmeldung: 05.01.2000
(73) Patentinhaber: EADS Deutschland GmbH, 85521 Ottobrunn (DE)
(72) Erfinder: Ertl, Harald, 82538 Geretsried (DE); Göbel, Johann, 81547 München (DE); Kunz, Sabine, 74960 Bad Rappenau (DE)
(74) Vertreter: Baum, Wolfgang, Dipl.-Ing.

(56) Entgegenhaltungen:
- WO-A-97/09109
- DE-A- 3 000 078
- DE-C- 3 517 105
- US-A- 5 227 598
- US-A- 5 827 355

## Beschreibung

Die Erfindung bezieht sich auf eine Vorrichtung zur Reinigung eines Luftstroms von Schad- und Geruchsstoffen mit einem die Schad- und Geruchsstoffe adsorbierenden, durch Desorption regenerierbaren Filter.

Eine derartige Vorrichtung ist bereits bekannt (DE 39 35 656 A1, DE 41 29 069 A1, DE 195 46 672 A1). Das Filter besteht dabei aus einem endlosen Filterband, das über zwei parallele Walzen läuft, die in Kammern angeordnet sind, in denen das Filterband zur Desorption der Schad- und Geruchtsstoffe aufgeheizt wird. Damit keine Schad- und Geruchsstoffe hindurch treten können, muss das Filterband in den Desorptionskammern vollständig desorbiert werden, bevor es durch den zu reinigenden Luftstrom mit Schad- und Geruchsstoffen beladen ist. Auch ist die Menge des Adsorptionsmittels im Hinblick auf eine Minimierung der Druckverluste beim Durchtritt des Luftstroms durch das Filterband begrenzt. Diese Bedingungen sind bei großen Volumenströmen und/oder einer hohen Schad- und Geruchsstoffbelastung des zu reinigenden Luftstroms nicht mehr in Einklang zu bringen.

Auch ist es bekannt, zwei Filter zu verwenden, denen die zu reinigende Luft wechselweise zugeführt wird, während das andere Filter desorbiert wird. Dies ist jedoch mit einem entsprechend großen Bauvolumen verbunden, das insbesondere bei einem Kraftfahrzeug häufig nicht zur Verfügung steht, um Schad- und Geruchsstoffe aus dem dem Personeninnenraum zuzuführenden Luftstrom zu entfernen.

Ferner ist aus US 5,227 598 ein Adsorbersystem zum Reinigen eines Luftstromes bekannt, bei dem ein Filter abschnittsweise zur Desorption mittels Mikrowellenstrahlung erwärmt wird.

Aufgabe der Erfindung ist es, eine Vorrichtung mit kleinem Bauvolumen zur Reinigung eines Luftstromes von Schad- und Geruchsstoffen bereitzustellen, welche auch bei einer hohen Schad- und Geruchsstoffbelastung eine vollständige Beseitigung dieser Stoffe gewährleistet.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Nach der Erfindung ist das Filter auch während der Desorption dem zu reinigenden Luftstrom ausgesetzt. Das heißt, es wird in keine gesonderte Kammer überführt, in der es dem zu reinigenden Luftstrom entzogen ist, um desorbiert zu werden.

Bei der erfindungsgemäßen Vorrichtung ist das Filter in einzeln erwärmbare Abschnitte geteilt und ein Abzug vorgesehen, der über den jeweils erwärmten, zu desorbierenden Filterabschnitt hinweg wandert. Da das Filter nicht als über Rollen umlaufendes Endlosband ausgebildet ist, kann es quer zur Bewegungsrichtung des Abzugs mit Falten versehen werden, wodurch die Filteroberfläche bei minimalem Bauvolumen der Vorrichtung wesentlich vergrößert und somit das Filter eine entsprechende große Schad- und Geruchsstoffmenge ohne erhebliche Druckverluste des Luftstroms beim Durchtritt des Filters adsorbieren kann.

Nach der Erfindung sind das Filter und der Abzug relativ zueinander bewegbar. Das heißt, der Abzug kann über das Filter hinweg bewegbar ausgebildet und das Filter stationär angeordnet sein, beispielsweise in einem rechteckigen Rahmen. Es ist jedoch auch denkbar, den Abzug stationär anzuordnen und das Filter beweglich auszubilden.

Die relative Geschwindigkeit der Bewegung zwischen Filter und Abzug kann in Abhängigkeit des Volumenstroms und/oder der Schad- und Geruchsstoffbelastung des zugeführten Luftstroms geregelt werden.

Zur abschnittsweisen Erwärmung des Filters ist eine elektrische Widerstandsheizung vorgesehen. Dazu kann das Filter elektrisch leitfähig oder mit einem elektrischen Leiter beheizbar ausgebildet sein. Falls ein solcher Leiter vorliegt, kann es sich beispielsweise um ein Drahtgeflecht handeln, auf dem das Filter flächig aufliegt oder das in den Filter integriert ist. Vorzugsweise besteht das Filtermaterial, also das Adsorptionsmaterial jedoch aus einem elektrisch leitfähigen Material, um die thermische Masse des Filters möglichst gering zu halten.

Dazu kann das elektrisch leitfähige Filter aus einem aus Kohlenstofffasern gebildeten textilen Material bestehen. Als besonders geeignet hat sich ein textiles Material erwiesen, bei dem die Kohlenstofffasern durch Oxidation eines textilen Materials aus regenerierten Cellulosefasern gebildet werden, beispielsweise aus Viskoseseide. Die Herstellung eines solchen Kohlenstofffasergewebes ist beispielsweise in GB 1,310,011 beschrieben.

Die erfindungsgemäße Vorrichtung ist insbesondere zur Reinigung des Luftstroms bestimmt, der den Personeninnenraum eines Transportmittels zugeführt wird. Sie kann jedoch auch für andere Zwecke eingesetzt werden, beispielsweise in Klimaanlagen von Gebäuden.

Nachstehend sind zwei Ausführungsformen der erfindungsgemäßen Vorrichtung anhand der Zeichnung beispielhaft näher erlautert.

Darin zeigen:
- Fig. 1: eine perspektivische Ansicht einer ersten Ausführungsform in schematischer Wiedergabe;
- Fig. 2: einen Schnitt entlang der Linie II-II in Fig. 1, und
- Fig. 3: einen Schnitt durch eine weitere Ausführungsform der Vorrichtung.

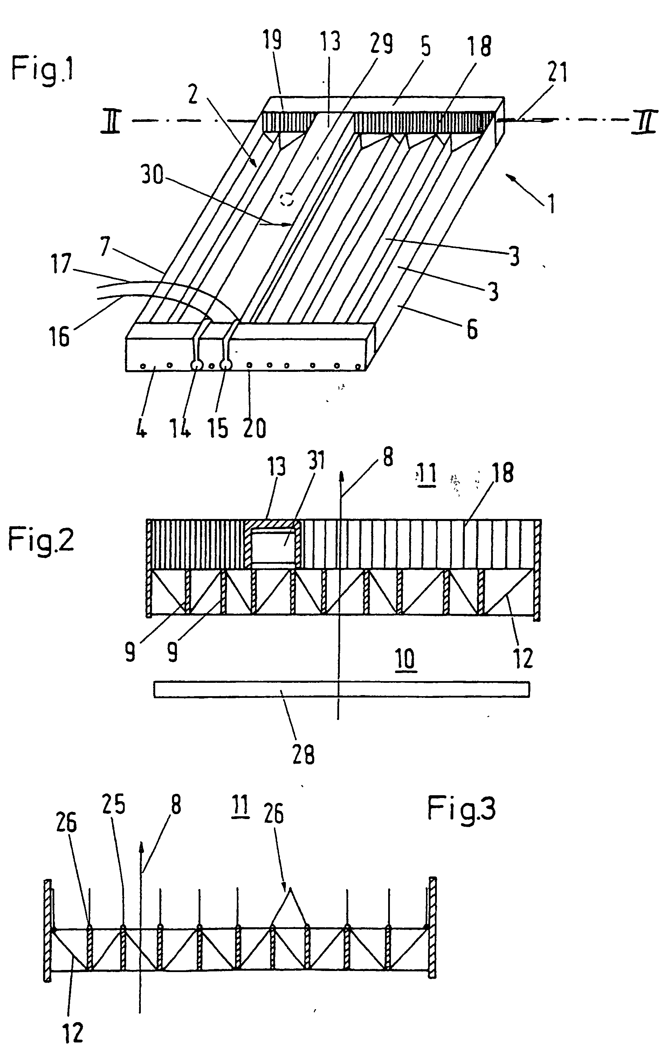

Gemäß Fig. 1 und 2 ist in einem Rahmen 1 ein Filter 2 aus einem Kohlenstofffasergewebe angeordnet, das plissiert ausgebildet ist, also querverlaufende Falten 3 aufweist. Der Rahmen 1 besteht aus den Längsabschnitten 4 und 5 sowie den Querstegen 6 und 7.

Durch das Filter 2 tritt der Schad- und Geruchsstoffe enthaltende, zu reinigende Luftstrom gemäß den Pfeilen 8 von der Lufteintrittsseite 10 zur Luftaustrittsseite 11 hindurch, wodurch die Schad- und Geruchsstoffe vom Filter 2 adsorbiert werden.

Zwischen den Längsabschnitten 4 und 5 des Rahmens 1 sind Trennwände 9 angeordnet, die in Richtung der Luftströmungsrichtung 8 ausgerichtet sind.

Das Filtergewebe 2 ist abwechselnd über die Ober- und Unterkanten der Trennwände 9 gespannt. Die Trennwände 9 bestehen z.B. aus Metall und sind jeweils mit einem elektrischen Kontakt 20 an der Außenseite des Längsabschnitts 4 verbunden. Damit wird entlang der Ecke jeder Falte 3 ein elektrischer Kontakt zwischen der metallischen Trennwand 9 und dem Filtergewebe 2 erzeugt.

Damit kann durch die Abschnitte 12 des Filtergewebes 2 zwischen zwei benachbarten Trennwänden 9 Strom geleitet werden, wodurch die Filterabschnitte 12 durch Widerstandsheizung einzeln erwärmt werden können.

Damit können die Schad- und Geruchsstoffe von den einzelnen Filterabschnitten 12 jeweils getrennt desorbiert werden. Es können aber auch mehrere Filterabschnitte 12 gleichzeitig desorbiert werden.

Zur Abführung des Desorbats ist ein sich quer über das Filter 2 erstreckender Abzug 13 vorgesehen, der über das Filter 2 gemäß dem Pfeil 30 hinweg bewegbar ist. Die Filterabschnitte 12 werden durch Ansteuern der Kontakte 20 nacheinander erwärmt. Die Bewegung des Abzugs 13 verläuft synchron. Das heißt, der nicht dargestellte Antrieb des Abzugs 13 ist so gesteuert, dass er sich jeweils über dem gerade erwärmten Filterabschnitt 12 befindet.

Zur Aufnahme des Desorbats kann der Abzug 13 beispielsweise aus einer mit ihrer Öffnung auf das Filter 2 gerichteten Rinne besteht. Die Breite des Abzugs 13 ist dabei so bemessen, dass er wenigstens einen Filterabschnitt 12 vollständig übergreift.

Zur abschnittsweisen Ansteuerung der Kontakte 20 können am Abzug 13 mit entsprechendem Abstand zwei Schleifkontakte 14, 15 befestigt sein, die über die Leitung 16, 17 mit der nicht dargestellten Stromquelle verbunden sind. Der leitfähige Filter 2, der sich zwischen den elektrischen Kontakten 14, 15 befindet, kann auch unabhängig von der Bewegung des Abzugs 13 geschaltet werden.

Die Desorptionsluftmenge kann in Abhängigkeit des Durchsatzes durch die Fahrzeugluftanlage und der Desorbattemperatur geregelt werden. Die Desorptiongstemperatur wird in Abhängigkeit des Volumenstroms geregelt.

Um das in den Abzug 13 eintretende Desorbat abzuführen, kann wenigstens ein Längsabschnitt z.B. 5 als Hohlprofil ausgebildet und mit einem Längsschlitz 31 auf der dem Abzug 13 zugewandten Seite versehen sein, wobei der Abzug 13 wenigstens an diesem Ende eine Öffnung aufweist, die über den Längsschlitz 31 mit dem Innenraum des Hohlprofils 5 kommuniziert. Um den Längsschlitz 31 außerhalb des Abzugs 13 zu verschließen, kann beispielsweise ein ziehharmonikaartiger Balg aus zwei Abschnitten 18 und 19 an der Innenseite des Längsabschnitts 5 vorgesehen sein. Jeder Balgabschnitt 18, 19 ist dabei mit einem Ende an dem Abzug 13 befestigt und auf eine Länge ausziehbar, die mindestens der Länge des Rahmens 1 entspricht. Das Desorbat kann damit über den Längsabschnitt 5 abgeführt werden, wie durch den Pfeil 21 veranschaulicht, beispielsweise zur Verbrennungsluft des Motors des Kraftfahrzeuges.

Anstelle des ziehharmonikaartigen Balgs kann aber auch ein Klappen/Lamellensystem am Längsabschnitt, z.B. 5, der als Hohlprofil ausgebildet ist, vorgesehen sein. Die Klappen sind im Adsorptionsbereich geschlossen und im vom Abzug überdeckten Desorptionsbereich geöffnet.

Bei einer weiteren nicht dargestellten Ausführungsform kann die Desorbatableitung durch einen Abzug erfolgen, der ebenfalls als sich quer über das Filter 2 erstreckender und über das Filter 2 hin- und herbewegbaren Kanal mit geschlossenen Seitenflächen und geschlossenen Stirnflächen ausgebildet ist, wobei an den Abzug bzw. Kanal, z.B. im mittleren Bereich bei 29, wie in Fig. 1 gestrichelt angedeutet, ein Schlauch angeschlossen ist, unter den das Desorbat abgeleitet wird.

Der Bereich des Filters 2 außerhalb des Abzugs 13 dient damit zur Adsorption der Schad- und Geruchsstoffe in dem Luftstrom 8, während der Filterabschnitt 12 unter dem Abzug 13 erwärmt und damit desorbiert wird. Nach der Desorption des einen Filterabschnitts 12 wird der Abzug 13 entsprechend dem Pfeil 30 über den nächsten Filterabschnitt 12 bewegt usw., bis er den Quersteg 6 erreicht. Dann wird er zum anderen Quersteg 7 zuruckbewegt, um das Filter 2 von neuem zu regenerieren.

Statt des in Fig. 2 dargestellten über den Filter 2 hinweg bewegbaren Abzugs 13 können, wie in Fig. 3 dargestellt, an jedem Abschnitt 12 an der Luftaustrittsseite 11 des Filters 2 auch um Querachsen 26 verschwenkbare Klappen 25 vorgesehen sein. Die Klappen 25 über dem jeweils erwärmten, zu desorbierenden Filterabschnitt 12 werden dann zu einem Abzug 26 geschlossen, wie dargestellt.

Mit der Widerstandsheizung kann das Filter 2 aus Kohlenstofffasergewebe ggf. auch auf Rotglut erwärmt werden, um nicht desorbierbare, irreversibel gebundene Stoffe zu verbrennen. Das Filter 2 kann auch katalytisch wirksame Materalien enthalten.

An der Lufteintrittsseite 10 des Filters 2 kann ein Vorfilter 28 angeordnet sein, das eine Zone bildet, in der vom Filter 2 nicht adsorbierbare Schad- und Geruchsstoffe adsorbiert und/oder in vom Filter 2 adsorbierbare Stoffe umgewandelt werden und eine Glättung der Konzentrationsspitzen erfolgt.

## Patentansprüche

1. Vorrichtung zur Reinigung eines Luftstroms von Schad- und Geruchsstoffen, umfassend
- einen die Schad- und Geruchsstoffe adsorbierenden, durch thermische Desorption regenerierbaren Filter (2),
- Mittel zur abschnittsweisen Erwärmung des Filters (2) und
- einen an der Luftaustrittsseite (11) des Filters angeordneten Abzug (13, 25) zur Abfuhr der desorbierten Schad- und Geruchsstoffe, der den jeweils erwärmten Filterabschnitt (12) übergreift,
**dadurch gekennzeichnet, dass**
das Filter (2) elektrisch leitfähig oder mit einem elektrischen Leiter beheizbar ausgebildet ist, und dass das Filter (2) bzw. der elektrische Leiter in einem den zu erwärmenden Filterabschnitten (12) entsprechenden Abstand derart ansteuerbar ist, dass in dem von dem Abzug (13, 25) übergriffenen Filterabschnitt (12) Strom fließt.

2. Vorrichtung nach Anspruch 1, **dadurch gekennzeichnet, dass** das Filter (2) quer verlaufende Falten (3) aufweist.

3. Vorrichtung nach Anspruch 1, **dadurch gekennzeichnet, dass** das Filter (2) und der Abzug (13) relativ zueinander bewegbar sind.

4. Vorrichtung nach Anspruch 3, **dadurch gekennzeichnet, dass** das Filter (2) stationär angeordnet und der Abzug (13) über das Filter (2) hinwegbewegbar ausgebildet ist.

5. Vorrichtung nach Anspruch 1, **dadurch gekennzeichnet, dass** das Filter (2) bzw. der elektrische Leiter in einem den zu erwärmenden Filterabschnitten (12) entsprechenden Abstand mit quer über das Filter (2) verlaufenden elektrischen Kontakten versehen ist und die entlang dem Filter (2) angebrachten elektrischen Kontakte derart ansteuerbar sind, dass in dem von dem Abzug (13, 25) übergriffenen Filterabschnitt (12) Strom fließt.

6. Vorrichtung nach einem der Ansprüche 1 - 5, **dadurch gekennzeichnet, dass** das elektrische leitfähige Filter aus einem aus Kohlenstofffasern gebildeten textilen Material besteht.

7. Vorrichtung nach Anspruch 5, **dadurch gekennzeichnet, dass** die elektrischen Kontakte (14, 15) an dem Abzug (13) befestigt sind.

8. Vorrichtung nach Anspruch 5, **dadurch gekennzeichnet, dass** die quer über das Filter (2) verlaufenden elektrischen Kontakte entlang der Ecken der Falten (3) des Filters (2) angeordnet sind.

9. Vorrichtung nach Anspruch 8, **dadurch gekennzeichnet, dass** die Kontakte in den Ecken der Falten (3) des Filters (2) als Trennwände (9) ausgebildet sind.

## Claims

1. A device for cleaning an air stream of pollutants and odorous substances, comprising
- a filter (2) which absorbs the pollutants and odorous substances and is capable of being regenerated by thermal desorption,
- means for heating the filter (2) in portions and
- an extractor (13, 25) arranged on the air outlet side (11) of the filter for removing the desorbed pollutants and odorous substances, which extractor extends over the filter portion (12) heated in each case
**characterised in that**
the filter (2) is constructed so as to be electrically conductive or heatable with an electrical conductor, and **in that** the filter (2) or the electrical conductor can be activated at a spacing corresponding to the filter portions (12) to be heated, in such a way that current flows in the filter portion (12) over which the extractor (13, 25) extends.

2. A device according to claim 1, **characterised in that** the filter (2) has pleats (3) extending across it.

3. A device according to claim 1, **characterised in that** the filter (2) and the extractor (13) can be moved relative to one another.

4. A device according to claim 3, **characterised in that** the filter (2) is stationary and the extractor (13) is constructed so as to be movable over the filter (2).

5. A device according to claim 1, **characterised in that** the filter (2) or the electrical conductor is provided at a spacing corresponding to the filter portions (12) to be heated with electrical contacts extending across the filter (2), and electrical contacts attached along the filter (2) can be activated in such a way that current flows in the filter portion (12) over which the extractor (13, 25) extends.

6. A device according to one of claims 1 - 5, **characterised in that** the electrically conductive filter consists of a textile material made from carbon fibres.

7. A device according to claim 5, **characterised in that** the electrical contacts (14, 15) are attached to the extractor (13).

8. A device according to claim 5, **characterised in that** the electrical contacts extending across the filter (2) are arranged along the corners of the pleats (3) of the filter (2).

9. A device according to claim 8, **characterised in that** the contacts are formed,in the corners of the pleats (3) of the filter (2) as partition walls (9).

## Revendications

1. Dispositif pour nettoyer une veine d'air afin d'en éliminer les matières nocives ou les odeurs, comprenant :
- un filtre (2) régénéré par désorption thermique, absorbant les matières nocives et les odeurs,
- des moyens pour réchauffer le filtre (2) par segments, et
- un extracteur (13, 25) installé au niveau du côté de sortie de l'air (11) du filtre pour évacuer les matières nocives et les odeurs, désorbées, et qui chevauche le segment de filtre (12), respectivement chauffé,
**caractérisé en ce que**
le filtre (2) est conducteur électrique ou peut être chauffé par un conducteur électrique, et
le filtre (2) ou le conducteur électrique est commandé à une distance correspondant aux segments de filtre (12) à chauffer pour que du courant électrique passe dans le segment de filtre (12) chevauché par l'extracteur (13, 25).

2. Dispositif selon la revendication 1,
**caractérisé en ce que**
le filtre (2) comporte des plis (3) transversaux.

3. Dispositif selon la revendication 1,
**caractérisé en ce que**
le filtre (2) et l'extracteur (13) peuvent être déplacés l'un par rapport à l'autre.

4. Dispositif selon la revendication 3,
**caractérisé en ce que**
le filtre (2) est fixe et l'extracteur (13) peut être déplacé sur le filtre (2).

5. Dispositif selon la revendication 1,
**caractérisé en ce que**
le filtre (2) ou le conducteur électrique est muni de contacts électriques alignés transversalement sur le filtre (2) à une distance correspondant au segment de filtre à chauffer (12), et des contacts électriques prévus le long du filtre (2) sont commandés de façon que du courant électrique passe dans le segment de filtre (12) chevauché par l'extracteur (13, 25).

6. Dispositif selon l'une des revendications 1 à 5,
**caractérisé en ce que**
le filtre conducteur électrique est formé d'une matière textile composée de fibres de carbone.

7. Dispositif selon la revendication 5,
**caractérisé en ce que**
les contacts électriques sont fixés à l'extracteur (13).

8. Dispositif selon la revendication 5,
**caractérisé en ce que**
les contacts électriques qui passent transversalement sur le filtre (2) sont prévus le long des coins des plis (3) du filtre (2).

9. Dispositif selon la revendication 8,
**caractérisé en ce que**
les contacts dans les coins des plis (3) du filtre (2) sont réalisés sous la forme de cloisons (9).
